# EUROPÄISCHE PATENTANMELDUNG

(11) **EP 2 930 142 A1**
(43) Veröffentlichungstag der Anmeldung: **14.10.2015**
(21) Anmeldenummer: 15162717.1
(22) Anmeldetag: 08.04.2015
(51) Int. Cl.: C01B 3/36, C01B 3/38, H01M 8/06

(54) **VORRICHTUNG UND VERFAHREN ZUR REAKTIVEN ENTSCHWEFELUNG VON ERDGAS IN BRENNSTOFFZELLEN-HEIZGERÄTEN**

(30) Priorität: 09.04.2014 DE 102014206836
(71) Anmelder: Vaillant GmbH, 42859 Remscheid (DE)
(72) Erfinder: Badenhop, Thomas, 51688 Wipperfürth (DE); Autermann, Andre, 40627 Düsseldorf (DE); Plümke, Marco, 40589 Düsseldorf (DE); Heiler, Christian, 58456 Witten-Herbede (DE)
(74) Vertreter: Popp, Carsten

(57) **Zusammenfassung**

Die Erfindung betrifft ein Brennstoffzellen-Heizgerät mit Entschwefelung sowie ein Verfahren zum Betreiben eines Brennstoffzellen-Heizgerät mit Entschwefelung. Erfindungsgemäß wird der zur Entschwefelung benötigte Sauerstoff in Form eines restsauerstoffhaltigen Abgases den Brennstoff beigemengt. Dabei wird abhängig vom Wert von Sensoren (19, 21, 22) mittels einer Dosierungseinrichtung (7) die Menge an zurückgeführten Abgas eingestellt.

## Beschreibung

Die Erfindung betrifft eine Vorrichtung und ein Verfahren zur reaktiven Entschwefelung von Erdgas in Brennstoffzellen-Heizgeräten.

Schwefelverbindungen stellen für nahezu alle Brennstoffzellensysteme ein Problem dar, die als Kraft-Wärme-Koppelungsanlage in der Hausenergieversorgung eingesetzt werden sollen und Erdgas oder Heizöl EL als Brennstoff verwenden. Nahezu alle kohlenwasserstoffhaltigen Energieträger enthalten in geringen Mengen Schwefel (S). Schwefel bildet mit fast allen Metallen Sulfide aus, welche die aktiven Zentren von Katalysatoren blockieren können. Dieses Phänomen wird besonders bei platinhaltigen Edelmetallkatalysatoren, aber auch den Metallen Nickel, Cerium, Gadolinium und Yttrium beobachtet. Die Elemente der seltenen Erden, Übergangsmetalle und die Platingruppenelemente sind beliebte Metalle für die Bildung von Elektrokatalysatoren in Brennstoffzellen. Diese Elektrokatalysatoren werden durch Schwefelverbindungen im Brenngas oder der Kathodenluft nachhaltig, meistens irreversibel durch die eintretende Sulfidbildung geschädigt.

Die Schwefelverbindungen werden gemäß dem Stand der Technik durch die Vorschaltung einer Entschwefelung der Brennstoffe entfernt, um nachgelagerte katalytische Reaktionsstufen, wie z.B. Reformer oder Brennstoffzelle vor einer Schwefelvergiftung zu schützen. Sie arbeiten auf dem Prinzip der sogenannten kalten Entschwefelung. Alternativ sind reaktive Entschwefelungseinrichtungen bekannt, die längere Standzeiten und somit geringere Entschwefelungskosten aufweisen.

In der Patentanmeldung US 2004/0106837 A1 wird eine Anordnung vorgeschlagen, in der ein kohlenwasserstoffhaltiger Eduktstrom, welcher Schwefelkomponenten enthält, über einen Katalysator geleitet, wo die Schwefelkomponenten mit Sauerstoff oxidiert werden, wobei der Sauerstoff unterstöchometrisch zugeführt wird. Die so entstandenen Schwefeloxide (SOx) werden stromabwärts über eine Adsorptionsstufe geführt und aus dem Eduktstrom entfernt. Das Sauerstoff zu Brennstoffverhältnis wird mit 0,01 bis 0,3 angegeben. Darüber hinaus wird beschriebenen, dass in einer Nebenreaktion entstehender Schwefelwasserstoffstoff an einem Zink-Festbett adsorbiert wird.

In der Patentanmeldung US 2012/0015259 A1 wird ein System beschrieben, mit dem Schwefelkomponenten in einem kohlenwasserstoffhaltigen Eduktstrom zu Schwefeloxid umgesetzt werden, wobei die oxydative Entschwefelung stromaufwärts des Brennstoffzellensystems angeordnet ist und der Oxidationskatalysator vorzugsweise aus Elementen der achten Nebengruppe des Periodensystems gebildet werden.

Aus DE 10 2007 023 668 A1 ist ein Verfahren bekannt, in dem bei 200 °C bis 450 °C halogenhaltige Verbindungen in einem methanreichen Gasstrom (z.B. Deponiegas) durch Hydrolyse in saure Reaktionsprodukte umgewandelt wird und Schwefelkomponenten durch Oxidation in Schwefeloxide überführt werden und anschließend die sauren Reaktionsprodukte adsorptiv abgetrennt werden.

Es ist Aufgabe der Erfindung, ein Brennstoffzellen-Heizgerät mit verbessertem Wirkungsgrad und Emissionseigenschaften sowie ein Verfahren zum Betreiben dieses Brennstoffzellen-Heizgeräts bereitzustellen.

Diese Aufgabe wird erfindungsgemäß durch ein Brennstoffzellen-Heizgerät gemäß den Merkmalen des unabhängigen Vorrichtungsanspruchs sowie durch ein Verfahren zum Betreiben des erfindungsgemäßen Brennstoffzellen-Heizgeräts gemäß den Merkmalen des unabhängigen Verfahrensanspruchs gelöst.

Vorteilhafte Ausgestaltungen ergeben sich durch die Merkmale der abhängigen Ansprüche.

Durch das erfindungsgemäße Brennstoffzellen-Heizgerät wird das Boudouard-Gleichgewicht verschoben, so dass weniger CO emittiert wird. Die Rückführung des Abgases stellt Wassedampf für den Reformer bereit. Dies verbessert den Wirkungsgrad und vermeidet Koksbildung.

Die Erfindung wird nun anhand der Figuren detailliert erläutert.

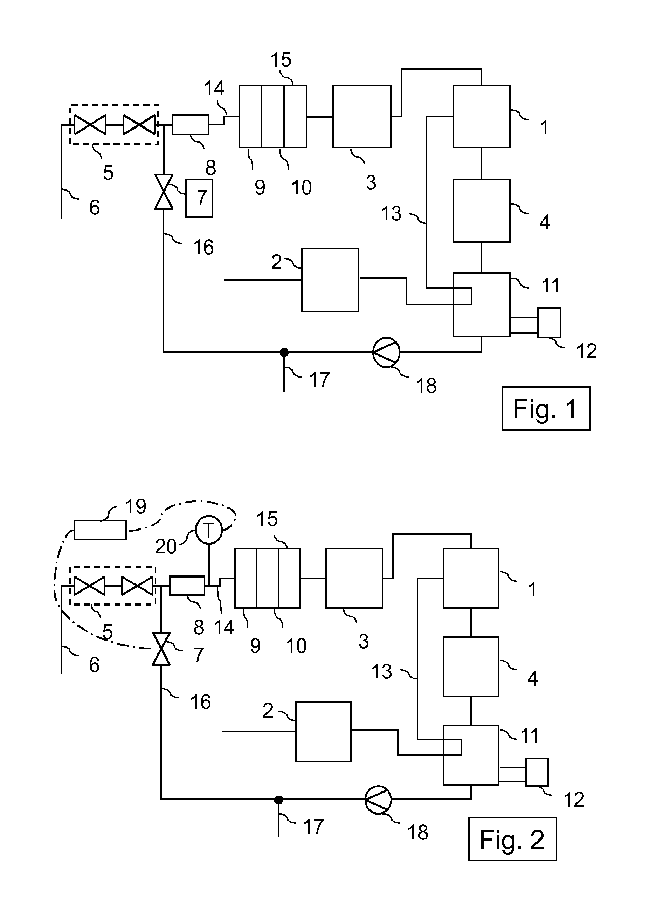

Die Figuren 1 bis 5 stellen unterschiedliche Ausführungsformen des Brennstoffzellen-Heizgeräts dar.

Figur 1 zeigt den prinzipiellen Aufbau des Brennstoffzellen-Heizgeräts. Erfindungsgemäß wird dem zu entschwefelnden Brennstoff, in der Regel Brenngas und bevorzugt Erdgas, sauerstoffhaltiges Abgas aus dem Brennstoffzellenprozess zugeführt, wobei der Sauerstoffgehalt nach der Zumischung einen Sauerstoffgehalt von 2 bis 4 Vol.-% betragen soll. Diese Zumischung erfolgt bei Umgebungstemperaturen. Danach wird das Gemisch einem selektiv wirkenden Oxidationskatalysator 8 zugeführt. Dieser Oxidationskatalysator arbeitet bei einer Temperatur von 200 bis 400°C. Dabei werden die Schwefelverbindungen selektiv durch Oxidationsreaktion der Schwefelverbindungen in Schwefeloxide umgesetzt.

Die Oxidation von Schwefelkomponenten wird beschrieben durch:
a) R-S / COS / H₂S + O₂ → SOₓ + CO₂ + H₂O mit x = 2 oder 3

Der Oxidationskatalysator ist edelmetallhaltiger Katalysator, z.B. Platin oder Palladium oder eine Kombination daraus. Durch die exotherme Reaktion der Oxydation der Schwefelverbindungen und in geringen Maße des Brennstoffes für zu einer Erwärmung des Oxidationskatalysators, der bei entsprechender Isolierung, daher während des Betriebes keine externe Zuführung von Wärme benötigt, um auf Betriebstemperatur zu bleiben. Während des Startvorganges ist der Entschwefelungskatalysator 8 auf Betriebstemperatur vorzuwärmen, z.B. mittels eines elektrischen Heizers (in Figur 1 nicht dargestellt).

Das zu entschwefelnde Erdgas 6 wird durch die Gasarmatur 5 dem Oxidationskatalysator 8 zugeführt. Zwischen der Gasarmatur 5 und dem Oxidationskatalysator 8 wird Sauerstoff aus der Abgasleitung 16 dem Brennstoff zugeführt. Die Abgasleitung 16 wird von der Abgasführung 17 des Brennstoffzellen-Heizgeräts gespeist. Über die Dosierungseinrichtung 7 wird die für oxydative und hydrolisierende Entschwefelung benötigte Menge sauerstoffhaltigen Abgases gestellt.

Die Hydrolyse von Carbonylsulfid wird beschrieben durch:
b) COS + H₂O → CO₂ + H₂S

Während des Startvorganges wird dem Nachbrenner 4 verschwefelter Brennstoff über eine separate Leitung zu geführt (in Figur 1 nicht dargestellt). Die heißen Brennerabgase werden mit der Kathodenabluft gemischt und ein Teil der Wärme wird in der Wärmeauskoppelungseinheit 11 genutzt, um die eintretenden Kathodenluft vorzuwärmen. Nach dem die Brennstoffzelle 1 auf Betriebstemperatur ist, wird über die Dosiereinheit 7 Abgas dem Katalysator 8 und über die Gasarmartur 5 Brennstoff zur Verfügung gestellt. Im Falle von einer SOFC liegt die Betriebstemperatur bei 650°C bis 1.000°C.

Das restsauerstoffhaltige Abgas-Brennstoff-Gemisch wird dem selektiven Oxidations- und/oder Hydrolysekatalysator 8 zugeführt, wo die unter (a) beschriebenen Reaktionen ablaufen und Schwefeloxide gebildet werden. Das nun schwefeloxidhaltige Erdgas wird den Adsorbern 9, 10 und 15 zugeführt. Im Adsorber 9 wird Schwefeltrioxid an ein basisches Festbett adsorbiert, welches aus den Elementen der ersten und/oder zweiten Hauptgruppe des Periodensystems gebildet ist, vorzugsweise Natrium oder Kalium. Der Adsorber 10 nimmt das gebildete Schwefeldioxid auf und wird aus den Elementen der ersten und/oder zweiten Hauptgruppe des Periodensystems gebildet ist, vorzugsweise Natrium oder Kalium.

Das Erdgasnetz wird derzeit als Speicher für regenerative Energien diskutiert. Mittels Elektrolyse wird Wasser in Wasserstoff und Sauerstoff zerlegt. Der Wasserstoff wird dem Erdgasnetz zugespeist und kann später für energieverfahrenstechnische Anwendungen z.B. in Gasturbinen genutzt werden. Daher ist zu erwarten, dass das Erdgas zukünftig zwischen 1 Vol.-% bis max. 10 Vol.-% enthalten kann. Der Katalysator 8 ist aus den Elementen der Platingruppe (Platin, Palladium oder Rhodium) gebildet für die selektive Oxidation der Schwefelkomponenten zu Schwefeldioxid bzw. Schwefeltrioxid. Der den Erdgasstrom begleitende Wasserstoff kann aber auch zur Entschwefelung eingesetzt werden, in dem die hydrierende Funktionalität des Katalysators 8 ausgenutzt wird. Die Hydrierung von Schwefelverbindungen wird beschrieben durch:
c) R-S + H₂ → H₂S + R-H

Der selektive Oxidations- und/oder Hydrolysekatalysator 8 kann aber auch zusätzlich mit Elementen co-legiert werden, die eine gute Hydrierungsfunktionalität aufweisen. Dies sind die Elemente Platin und Palladium, Rhodium und Ruthenium, Nickel, Eisen,sowie Kupferchromit und Zinkchromit

Der durch die heterogen-katalysierte Hydrierung gebildete Schwefelwasserstoff (Reaktion c) und der durch die Hydrolyse von Carbonylsulfid (COS) gebildete Schwefelwasserstoff (Reaktion b) wird stromabwärts in einem Festbett 15 adsorbiert. Das Adsorbens kann ein Zink-Festbett sein, oder eine Aktivkohle sein. Des Weiteren wird hier erfindungsgemäß kupfer- oder manganbasierte Adsorbens (z.B. Kupferoxid oder Manganoxid) vorgeschlagen. Der Adsorber 15 ist den Adsorbern 9, 10 für die Adsorption der Schwefeloxide, die durch die Reaktion (a) gebildet sind, nachgeschaltet, um auch eventuell durch Dimerisierungsreaktionen oder andere Nebenreaktionen in den Adsorbern 9,10 gebildeten Schwefelwasserstoff sicher auch den Gasstrom zu entfernen.

Das entschwefelte Erdgas wird dann dem Reformer 3 zugeführt, wo ein wasserstoffreiches Brenngas erzeugt wird. Je nach eingesetztem Brennstoffzellentyp kann der Reformer 3 noch eine Konvertierungs- und Gasfeinreinigungsstufe enthalten (beide nicht dargestellt). Das wasserstoffreiche Brenngas wird der Brennstoffzelle 1 zugeführt, wo dieses zusammen mit der vorgewärmten Kathodenluft 13 elektrochemisch umgesetzt wird. Das Anodenoffgas und die Kathodenabluft werden der Nachverbrennungsstufe 4 zugeleitet, wo alle brennbaren Anteile totaloxidiert werden. In der Wärmeauskoppelungseinheit 11 wird zunächst die Kathodenluft vorgewärmt und im Abgas enthaltene Restwärme auf den Heizkreis 12 übertragen.

Stromabwärts der Wärmeauskoppelungseinheit 11 ist die Abgasförderungseinrichtung 18 angeordnet, welche für einen Unterdruck im Brennstoffzellensystem sorgt und das Abgas über die Leitung 17 aus dem System fördert. Die Abgasförderungseinrichtung kann als radiales oder axiales Gebläse ausgeführt sein. Auch die serielle oder parallele Schalung mehrere Abgasförderungseinrichtungen ist möglich. Über die Abgasleitung 16 wird ein Teil des Abgasstromes dem Prozess für die Entschwefelung zur Verfügung gestellt.

Die für den Entschwefelungsprozess benötigte Abgasmenge ist abhängig von deren Sauerstoffpartialdruck. Der Sauerstoffpartialdruck ist abhängig von einer Vielzahl Parameter, wie z.B. Umsatzgrad, Degradation der Elektrokatalysatoren usw. Daher bedarf es einer einfachen und nach Möglichkeit unabhängigen Regelung der Dosierungseinheit 7. Eine besonders einfache Anordnung ist Figur 2 dargestellt. Der Temperatursensor 20 misst die Gastemperatur oder eine für die Gastemperatur charakteristische Temperatur stromabwärts vom selektiven Oxidations- und/oder Hydrolysekatalysator 8. Die Oxidation und Hydrierung von Schwefelkomponenten zu sauren Reaktionsprodukten und Schwefelwasserstoff ist exotherm und führt zu einer Temperaturerhöhung. Durch die Zugabe sauerstoffhaltigen Abgases erhöht sich auch die partielle und Totaloxidation des Brennstoffes (ungewollte Nebenreaktion) und damit die Temperatur im selektiven Oxidations- und/oder Hydrolysekatalysator 8. Auch bei dieser Nebenreaktion wird Reaktionswärme frei. In dem erfindungsgemäßen Regelungskonzept in Figur 2 wird die Temperatur hinter dem Katalysator 8 durch den Temperatursensor 20 gemessen. Das Temperaturelement kann ein Widerstandsthermometer oder ein Thermoelement sein. Das Temperatursignal wird in Regelungseinheit 19 ausgewertet.

Ist die gemessene Temperatur niedriger als ein festgelegter unterer Schwellenwert (z.B. 200 °C) wirkt die Regelungseinheit 19 auf die Dosierungseinheit 7 so ein, dass dem Katalysator 8 mehr sauerstoffhaltiges Abgas zugeführt wird. Überschreitet die Temperatur 20 einen oberen Grenzwert, so wirkt die Regelungseinheit 19 auf die Dosierungseinheit so ein, dass dem Katalysator 8 weniger sauerstoffhaltiges Abgas zur Verfügung gestellt wird.

Aus Experimenten ist eine optimale Prozesstemperatur bekannt. Mittels PI-, PID- oder anderen Regelungsverfahren kann die Regelungseinheit 19 auf der optimalen Temperatur halten, welche zwischen 200 °C und 450 °C liegt.

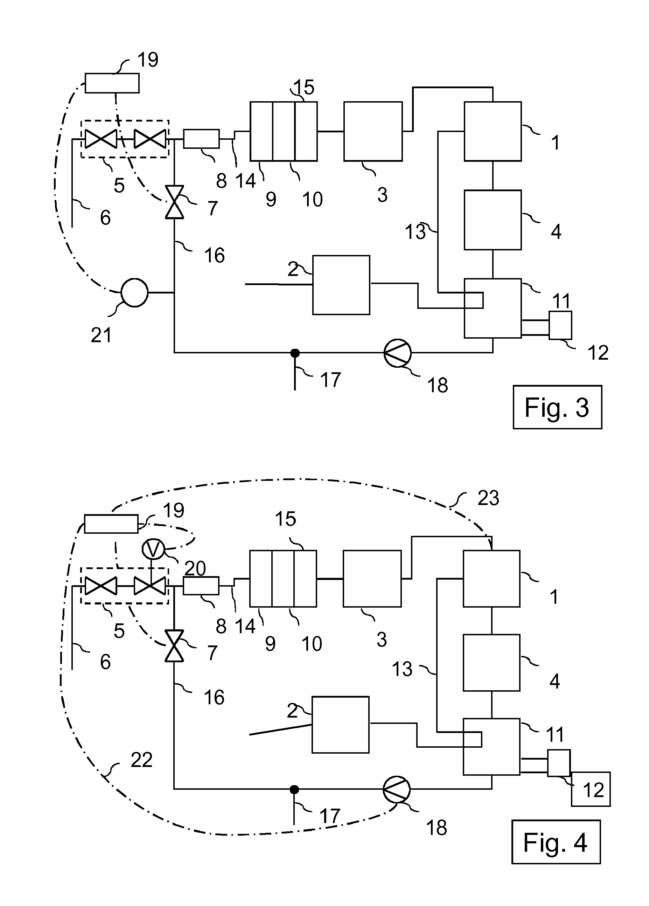

In einem anderen Regelungskonzept, welches in Figur 3 dargestellt ist, misst ein Sensor 21 in der Abgasleitung 16 den Sauerstoffpartialdruck oder ein Signal aus dem der Sauerstoffpartialdruck her leitbar ist. Das Signal des Sauerstoffsensors 21 wird in der Regelungseinheit 19 mit dem Sollwert verglichen. Entsprechend diesem Vergleich wirkt die Regelungseinheit 19 auf die Dosierungseinheit 7 ein und stellt entweder mehr sauerstoffhaltiges Abgas oder weniger zu.

Der Sauerstoffsensor 21 kann ein elektrochemischer Sensor, ein elektrochemischer Sensor auf Basis von Galliumoxid oder Gallium-Arsenit, eine Lambda-Sonde, eine Lambda-Sonde auf Basis von Lanthan-Strontium-Magnat, oder eine Breitband-Lambda-Sonde sein.

In einem weiteren Regelungskonzept kann auf zusätzliche Sensoren für die Regelung der Dosierungseinheit 7 verzichtet werden, in dem vorhandene Kenngrößen von der Regelungseinheit 19 dazu genutzt werden, die Abgasbeimengung für den selektiven Oxidations- und/oder Hydrolysekatalysator 8 zu stellen. Dies ist in Figur 4 dargestellt. Aus der Gebläsekennlinie und der aktuellen Drehzahl des Gebläses 18 ist der Volumenstrom des Abgases bekannt. Die Regelungseinheit 19 ist über die Signalleitung 22 mit dem Gebläse 18 verbunden.

Aus der Messung des Brennstoffmassenstroms oder -volumenstroms mittels des Sensors 20 und der fest vorgegebenen Reformerluft der hier nicht dargestellten Luftleitung zum Reformer zu Brennstoffverhältnis, der charakteristischen Reformertemperatur ist die Wasserstoffleistung des Reformers 3 bekannt bzw. bestimmbar. Der Sensor 20 ist mit der Regelungseinheit 19 verbunden. Der Sensor 20 ist ein Volumen- oder Massenstromsensor, ausgeführt als Flügelradzähler, Balgenzähler, Vortexsensor, magentisch induktive Volumenstrommessung, Ultraschallsensor, Schwimmer, Heizdraht-Anemometer, Differenzdrucksensor oder kapazitiver Sensor.

Aus der Messung des Stromflusses am Brennstoffzellenstapel 1 kann über das zweite Gesetz nach Faraday der Sauerstoffverzehr der Kathodenluft bestimmt werden und mit der Stöchiometrie der Brennstoffzelle auch der Wasserstoffverbrauch ermittelt werden. Der Brennstoffzellenstapel 1 ist mit der Signalleitung 23 mit der Regelungseinheit 19 zur Bestimmung des Stromflusses verbunden.

Aus den vorgenannten Kenngrößen kann die Regelungseinheit 19 den Sauerstoffpartialdruck des Abgases ermitteln und entsprechend dem Betriebskennfeld der Dosierungseinheit 7 die Abgaszumessung vornehmen.

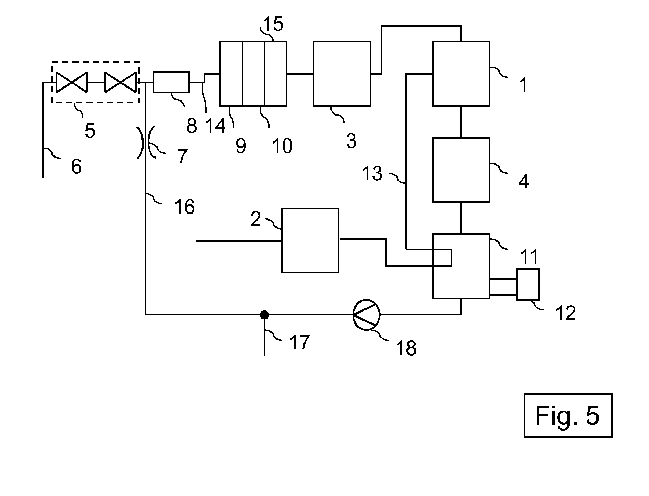

In einer bevorzugten Ausführungsform in Figur 5 ist die Dosierungseinheit 7 als eine Blende oder eine volumenstromreduzierende Strömungseinbau ausgeführt, weil der Luftsauerstoffbedarf aus dem Abgasstrom 16 proportional dem zu entschwefelnden Brennstoffstrom für jeden Betriebspunkt ist, wenn die zugeführte Luft über das Kathodenluftversorgungsmodul 2 ebenfalls dem Brennstoffstrom proportional ist oder eine Überversorgung mit Sauerstoff für den selektiven Oxidations- und/oder Hydrolysekatalysator 8 unproblematisch ist. Eine solche Überversorgung ist immer dann als unkritisch anzusehen, wenn der eingesetzte Katalysator sehr selektiv für die Reaktion (a) ist und unerwünschte Nebenreaktionen, wie z.B. teilweise oder vollständige Oxidation von Brennstoff unterdrückt werden. Ein solcher Katalysator könnte beispielsweise aus den Elementen der 8.ten Nebengruppen des Periodensystems gebildet werden. Dies sind z.B. Nickel, Eisen und Kobalt oder Palladium, Rhodium und Ruthenium oder Platin, Osmium und Iridium

Des Weiteren können solche Katalysatoren auch aus anderen Nebengruppenelementen aufgebaut werden, wie z.B. Scandium, Titan und Vanadium.

Durch die Bildung eines solchen hoch selektiven Katalysators aus den vorgenannten Elementen bzw. deren Oxide und Mischungen aus diesen Elementen und deren Oxide ist auch möglich, die gesamte benötigte Prozessluft für den Reformer 3 über die Dosierungseinheit 7 zu führen. Somit kann die nicht dargestellte Luftleitung zum Reformer 3 entfallen. In einer bevorzugten Ausführung ist die Dosierungseinheit 7 dann, wie in Figur 5 dargestellt, als Blende oder Strömungseinbau ausgeführt. Der Katalysator 8 wird nun nicht mehr geregelt, sondern die Abgasführung über die Abgasleitung 16 erfolgt durch die hier nicht dargestellte Reformerregelung.

### Bezugszeichenliste

- 1: Brennstoffzelle
- 2: Kathodenluftversorgungsmodul
- 3: Reformer
- 4: Nachbrenner
- 5: Gasarmatur
- 6: Brenngaszuführung
- 7: Dosierungseinrichtung
- 8: Selektiver Oxidations- und/oder Hydrolysekatalysator
- 9: Schwefeltrioxid-Adsorber
- 10: Schwefeldioxid-Adsorber
- 11: Wärmeauskoppelungseinheit
- 12: Heizkreis oder Pufferspeicher
- 13: Vorgewärmte Kathodenluft
- 14: Erdgasstrom mit umgesetzten Schwefelkomponenten
- 15: Adsorber
- 16: Abgasleitung
- 17: Abgasabführung
- 18: Abgasförderungseinrichtung
- 19: Regelungseinheit
- 20: Volumen- oder Massenstromsensor
- 21: Sauerstoffsensor
- 22: Temperatursensor

## Patentansprüche

1. Mit Brennstoff, bevorzugt mit Brenngas betreibbares Brennstoffzellen-Heizgerät, umfassend eine Brennstoffzelle (1) zum Erzeugen von Strom und Wärme, umfassend eine Vorrichtung zur reaktiven Entschwefelung des Brennstoffs mit einem selektiven Oxidations- und/oder Hydrolysekatalysator (8) zum Umsetzen der Schwefelbegleiter unter Zugabe von in einer Dosierungseinrichtung (7) zugeführtem sauerstoffhaltigen Gas in Schwefeloxide und mit in Strömungsrichtung des Brennstoffs daran anschließend zumindest einen Adsorber (9, 10, 15) zum adsorptiven Entfernen der Schwefeloxide aus dem Brenngas, und umfassend eine Abgasabführung (17) zum Abführen des Abgases der Brennstoffzelle und/oder eines der Brennstoffzelle (1) nachgeschalteten Nachbrenners (4), **dadurch gekennzeichnet, dass** die Dosierungseinrichtung (7) so mit der Abgasabführung (17) verbunden ist, dass als sauerstoffhaltigen Gas zumindest ein Teil des Abgases des Brennstoffzellen-Heizgeräts verwendet wird.

2. Brennstoffzellen-Heizgerät nach Anspruch 1, wobei die Dosierungseinrichtung (7) als Blende ausgeführt ist und es sich bei dem selektiven Oxidations- und/oder Hydrolysekatalysator (8) um einen hoch selektiven Katalysator handelt.

3. Brennstoffzellen-Heizgerät nach Anspruch 2, wobei der selektive Oxidations- und/oder Hydrolysekatalysator (8) mit den Elementen Platin und Palladium, Rhodium und Ruthenium, Nickel, Eisen oder Kupferchromit und Zinkchromit3 co-legiert ist.

4. Brennstoffzellen-Heizgerät nach einem der Ansprüche 1 bis 3, wobei zwischen dem selektiven Oxidations- und/oder Hydrolysekatalysator (8) und der Brennstoffzelle (1) ein Reformer (3) so angeordnet ist, dass der gesamte für den Reformer benötigte Sauerstoff über die Dosierungseinrichtung (7) zugeleitet wird.

5. Verfahren zur reaktiven Entschwefelung von Brenngas in Brennstoffzellen-Heizgeräten in einem Brennstoffzellen-Heizgerät nach einem der Ansprüche 1 bis 4, bei dem dem zu entschwefelnden Brenngas sauerstoffhaltiges Abgas aus dem Brennstoffzellenprozess zugeführt wird das Gemisch einem selektiv wirkenden Oxidationskatalysator (8) zugeführt wird, **dadurch gekennzeichnet, dass** das Gemisch aus Brennstoff und zugemischtem Abgas einen Sauerstoffgehalt von 2 - 4 % aufweist.

6. Verfahren nach Anspruch 6, wobei die Zumischung bei Umgebungstemperatur erfolgt.

7. Verfahren nach Anspruch 5 oder 6, wobei hinter dem selektiven Oxidations- und/oder Hydrolysekatalysator (8) die Temperatur mittels eines Temperatursensors (22) gemessen wird und mittels einer Regelungseinheit (19), die auf die Dosierungseinrichtung (7) wirkt, die Sauerstoffzufuhr erhöht wird, wenn die Temperatur einen unteren Schwellenwert unterschreitet und die Sauerstoffzufuhr verringert wird, wenn die Temperatur einen oberen Schwellenwert überschreitet.

8. Verfahren nach Anspruch 7, wobei der untere Schwellenwert 200 °C und/oder der obere Schwellenwert 450 °C beträgt.

9. Verfahren nach einem der Ansprüche 5 bis 8, wobei die durch die Dosierungseinrichtung (7) eingestellte zugeführte Abgasmenge in Abhängigkeit vom Sauerstoffpartialdruck des zugeführten Abgases eingestellt wird.

10. Verfahren nach einem der Ansprüche 5 bis 9, wobei die durch die Dosierungseinrichtung (7) eingestellte zugeführte Abgasmenge in Abhängigkeit von der Drehzahl und der Kennlinie des Gebläses der Abgasförderungseinrichtung (18), in Abhängigkeit des mittels eines Sensor (20) erfassten Brennstoffmassen- oder Volumenstroms und dem Luftverhältnis, und in Abhängigkeit vom Stromfluss der Brennstoffzelle (1) festgelegt wird.
